(19) Europäisches Patentamt

European Patent Office

Office européen des brevets

(11) **EP 0 857 611 B1**

(12) **EUROPÄISCHE PATENTSCHRIFT**

(45) Veröffentlichungstag und Bekanntmachung des Hinweises auf die Patenterteilung:
**17.12.2003  Patentblatt 2003/51**

(51) Int Cl.$^7$: **B60Q 1/14**

(21) Anmeldenummer: **98101969.8**

(22) Anmeldetag: **05.02.1998**

(54) **Sensoreinrichtung und Verfahren für eine automatische Fahrlichtschaltung**

Sensor device and method for vehicle automatic lighting control

Dispositif de détection et procédé pour commander automatiquement l'éclairage d'un véhicule

(84) Benannte Vertragsstaaten:
**DE ES FR GB IT**

(30) Priorität: **06.02.1997  DE 19704415**

(43) Veröffentlichungstag der Anmeldung:
**12.08.1998  Patentblatt 1998/33**

(73) Patentinhaber: **Hella KG Hueck & Co.**
**59552 Lippstadt (DE)**

(72) Erfinder:
• **Boehlau, Christian**
**59558 Lippstadt (DE)**
• **Damasky, Joachim, Dr.**
**59557 Lippstadt (DE)**

(56) Entgegenhaltungen:
**FR-A- 2 228 367**    **US-A- 2 944 188**
**US-A- 5 537 003**

## Beschreibung

Die Erfindung betrifft eine Sensoreinrichtung nach dem Oberbegriff des Patentanspruchs 1.

Die Erfindung betrifft weiterhin ein Verfahren nach dem Oberbegriff des Patentanspruchs 9.

Auf des prioritätsgleiche europäische Patent 0 857 610 des Patentinhabers wird verwiesen.

Zur Unterstützung des Fahrers von Fahrzeugen sind automatische Fahrlichtschaltungen bekannt. Diese Systeme sollen z. B. folgende Unaufmerksamkeiten des Fahrers ausgleichen:

- Losfahren bei Dunkelheit ohne Licht, wie es bei gut ausgeleuchteten Straßen in der Stadt vorkommt,

- Dämmerungseinbruch während der Fahrt; eine Situation, in der oft erst sehr spät das Licht eingeschaltet wird, speziell auf wenig befahrenen Straßen, wo der Fahrer nicht durch andere beleuchtete Fahrzeuge darauf aufmerksam wird, dass das Licht einzuschalten ist,

- automatische Lichteinschaltung bei Einfahrt in einen Tunnel oder andere Dunkelstrecken, wenn vergessen wurde, das Licht einzuschalten.

Bei Unterschreiten eines bestimmten Helligkeitswertes der Umgebung soll das Fahrlicht eingeschaltet werden. Bei kurzen Dunkelstrecken, beispielsweise der Unterfahrung von kurzen Unterführungen oder Brücken soll ein unerwünschtes automatisches Einschalten des Fahrlichtes vermieden werden. Kurze Umfeldlichteinbrüche sollen daher durch eine Vorfeldlichtmessung erkannt bzw. nicht berücksichtigt werden.

Aus der DE 30 40 555 A1 ist eine Sensoreinrichtung bekannt, bei der eine Sammellinse mit einer optischen Achse einem Lichtempfangselement vorgelagert ist. Sammellinse und Lichtempfangselement sind in die Fahrtrichtung gerichtet, d. h., die Sensorachse des Lichtempfangselementes und die optische Achse der Sammellinse verlaufen etwa parallel zu einer Fahrzeuglängsachse. Bei der benötigten Empfindlichkeit des Lichtempfangselementes würde eine solche Sensoreinrichtung auch auf kurze Vorfeldlichteinbrüche reagieren. Deshalb sind in der bekannten Sensoreinrichtung zusätzliche seitlich ausgerichtete Lichtempfangselemente bzw. Umfeldlichtsensoren vorgesehen. Nachteilig dabei ist, dass diese in einem Gehäuse angeordneten Lichtempfangselemente bzw. Sensoren aufeinander abgestimmt und die Lichteintrittsflächen senkrecht zu den vorgesehenen Lichteinstrahlungsrichtungen angeordnet sein müssen. Die Sensoreinrichtung ist in ihrem Aufbau dadurch kompliziert, teuer und zugleich voluminös. Zudem müssen die Umfeldlichtsensoren, deren Lichteintrittsflächen in entgegengesetzte Richtungen zeigen, quer zur Fahrtrichtung angeordnet werden, wodurch eine Anordnung der Sensoreinrichtung am Fahrzeug begrenzt bzw. erschwert wird.

Weiterhin ist aus der DE 37 20 406 A1 ein sogenannter Kompositlichtsensor bekannt, der mindestens zwei in einer Ebene nebeneinander angeordnete Lichtempfangselemente aufweist. Die Sensorachsen der Lichtempfangselemente verlaufen daher parallel zueinander. Durch unterschiedliche Lichteintrittsmittel, wie unterschiedliche Linsen, weisen die Lichtempfangselemente jeweils unterschiedliche optische Bedingungen, wie z. B. unterschiedliche Lichteinspeiswinkel auf. Bei dieser Sensoreinrichtung ist nachteilig, dass die optischen Achsen beider Lichtempfangselemente parallel zueinander verlaufen. Die vorgesehenen Lichteinstrahlungsrichtungen von Vorfeld- und Umfeldlicht müssen daher ebenfalls im wesentlichen parallel verlaufen. Die Lichteintrittsflächen dieser Sensoreinrichtung müssen daher etwa rechtwinklig zur Fahrzeuglängsachse angeordnet werden, was eine Anordnung der Sensoreinrichtung am Fahrzeug ebenfalls begrenzt bzw. erschwert, da schräge Glasflächen, wie Fahrzeugfrontscheiben oder Scheinwerferabdeckungen, schräg auftreffendes Licht ablenken.

Die Lichteintrittsflächen der bekannten Sensoreinrichtungen zur Vorfeldlichtdetektierung können somit nicht ohne Messwertverfälschungen in einer vertikalen Ebene hinter in vertikaler Richtung aus aerodynamischen Gründen geneigten Glasflächen - beispielsweise einer Fahrzeugfrontscheibe - angeordnet werden, da die geneigten transparenten Flächen eigene optische Wirkungen zeigen. Bei den bekannten Sensoreinrichtungen ist es insbesondere schwierig bzw. unmöglich, den Sensor bei schräg liegender Lichteintrittsfläche so anzuordnen, dass sein Maximum zur Detektierung des Vorfeldes in horizontaler Richtung liegt.

Das Dokument US 5 537 003 A (das dem Oberbegriff des Ansprüche 1 und 9 entspricht) offenbart eine Sensoreinrichtung für eine automatische Fahrlichtschaltung eines Fahrzeuges mit einem Lichtempfangsgerät und einer Sammeloptik, die das Lichtbündel in Richtung des Lichtempfangselementes fokussiert. Die Sammeloptik ist in einer Öffnung eines Drehkopfes der Sensoreinrichtung integriert. Durch einen der Sammeloptik nachgeordneten Spiegel enthaltend einen Rotfilter wird das Vorfeldlichtbündel um einen rechten Winkel in Richtung einer Oberfläche des Lichtempfangselementes reflektiert. Nachteilig an der Sensoreinrichtung ist der relativ große Bauraumbedarf.

Aufgabe der vorliegenden Erfindung ist es daher, eine Sensoreinrichtung zur Vorfeldlichtdetektierung zu schaffen, deren mit seinem Maximum in horizontaler Richtung Vorfeldlicht detektierender Sensor mit seiner Lichteintrittsfläche gegenüber der Fahrzeuglängsachse bzw. gegenüber einer vertikalen Ebene geneigt angeordnet werden kann. Zugleich soll die Sensoreinrichtung einen geringen Raum beanspruchen und kostengünstig herstellbar sein.

Die Aufgabe wird erfindungsgemäß durch die Merkmale des Patentanspruchs 1 gelöst.

Durch die vertikale Neigung der Lichteintrittsfläche gegenüber der Fahrzeuglängsachse wird vorteilhaft erreicht, dass im wesentlichen nur ein parallel zur Fahrzeuglängsachse verlaufendes Lichtbündel quasi paralleler Strahlen über die Sammellinse zu dem Lichtempfangselement geleitet wird. Licht aus anderen Raumrichtungen wird so gebrochen, dass es an dem Lichtempfangselement vorbeigeleitet wird. Störendes bzw. unerwünschtes Licht aus anderen Raumrichtungen gelangt damit praktisch nicht zu dem Lichtempfangselement. Durch die Detektierung des Lichtes in Richtung der Fahrzeuglängsachse bleiben somit kurze Umfeldlichteinbrüche, wie sie beispielsweise bei kurzen Dunkelheitsstrecken infolge von dem Unterfahren von Brücken oder kurzen Unterführungen entstehen, unberücksichtigt. Durch die Verwendung eines optischen Elementes mit einer in vertikaler Richtung gegenüber einer etwa horizontalen Fahrzeuglängsachse geneigten Lichteintrittsfläche kann auf eine rechtwinklige Anordnung der Lichteintrittsfläche verzichtet werden, so dass eine universelle Anordnung der Sensoreinrichtung möglich ist. Zugleich wird auch eine kompakte Bauform der Sensoreinrichtung verbunden mit einer kostengünstigen Herstellung und Montage ermöglicht. Die Sensoreinrichtung kann auch insbesondere von innen an eine Fahrzeugfrontscheibe oder eine geneigte Scheinwerferabdeckscheibe geklebt werden. Ein Verschmutzen der Sensoreinrichtung kann damit zuverlässig vermieden werden. Beispielsweise kann die Fahrzeugfrontscheibe als optisches Element in die Sensoreinrichtung integriert werden. Durch die vertikale Neigung der Lichteintrittsfläche gegenüber der Fahrzeuglängsachse wird vorteilhaft erreicht, dass Vorfeldlicht mit einem Maximum in horizontaler Richtung in einem relativ kleinen Winkel als quasi paralleles Licht detektiert werden kann.

Nach einer bevorzugten Ausführungsform ist das optische Element als Prismenkörper ausgebildet, der in etwa die Form eines schräg abgeschnittenen Kreiszylinders aufweist. Der Prismenkörper ist an seiner der Lichteintrittsfläche abgewandten Lichtaustrittsfläche mit der planen Seite der z.B. als plankonvexe Sammellinse ausgebildeten Sammeloptik verklebt. Zur besseren Fokussierung ist die Sammellinse als asphärische Linse ausgebildet. Die Sensoreinrichtung lässt sich so einfach montieren und wird bevorzugt mit ihrer Lichteintrittsfläche von innen an die Fahrzeugfrontscheibe geklebt. Es ist grundsätzlich aber auch möglich, den Sensor an anderer Stelle mit seiner Eintrittsfläche etwa parallel zur Fahrzeugfrontscheibe anzuordnen.

Nachteilig bei den bekannten Verfahren für eine automatische Fahrlichtschaltung ist, dass das zu detektierende Vorfeldlicht auf eine Lichteintrittsfläche fallen muss, die zu einer horizontalen Hauptdetektionsrichtung senkrecht angeordnet sein muss. Dadurch werden die bekannten Verfahren in ihren Einsatzmöglichkeiten begrenzt und die entsprechenden Sensoreinrichtungen sind schwierig zu montieren und sind nicht verschmutzungssicher.

Weitere Aufgabe der Erfindung ist es daher, ein Verfahren für eine automatische Fahrlichtschaltung eines Fahrzeuges so zu verbessern, dass es durch eine gegenüber seiner Hauptdetektionsrichtung neigbare Lichteintrittsfläche universell einsetzbar, platzsparend und einfach und verschmutzungssicher montierbar ist.

Diese Aufgabe wird erfindungsgemäß durch die Merkmale des Patentanspruchs 9 gelöst.

Dadurch, daß aus horizontaler Richtung einfallendes Vorfeldlicht von einer in vertikaler Richtung geneigten Lichteintrittsfläche gebrochen und über eine Sammeloptik fokussiert wird, ist das Verfahren universell einsetzbar und eine geneigte Fahrzeugfrontscheibe ist als optisches Element in das Verfahren integrierbar, so daß die entsprechende Sensoreinrichtung einfach und verschmutzungssicher beispielsweise an die Rückseite einer Fahrzeugfrontscheibe montierbar bzw. klebbar ist.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

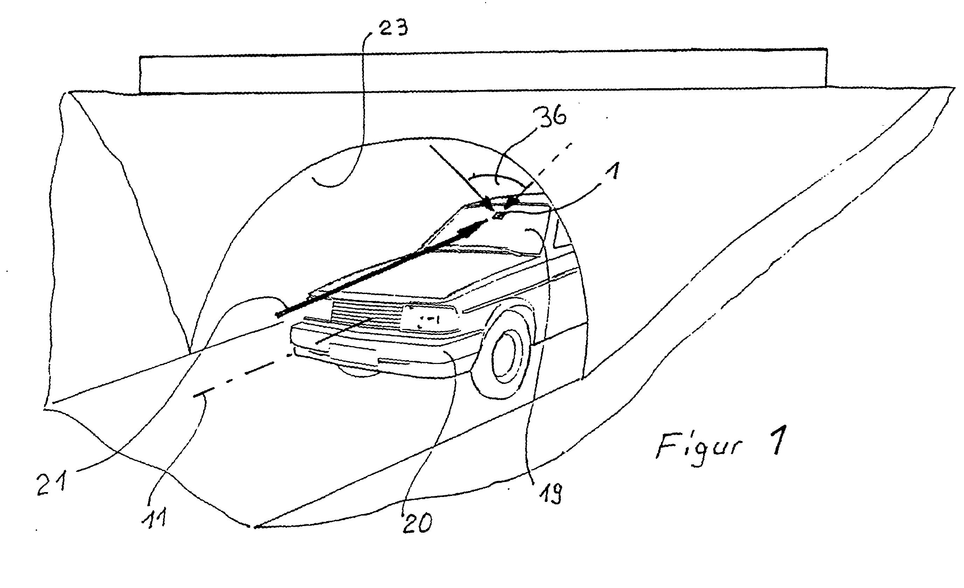

Figur 1: Eine räumliche Darstellung eines Fahrzeuges mit einer Sensoreinrichtung,

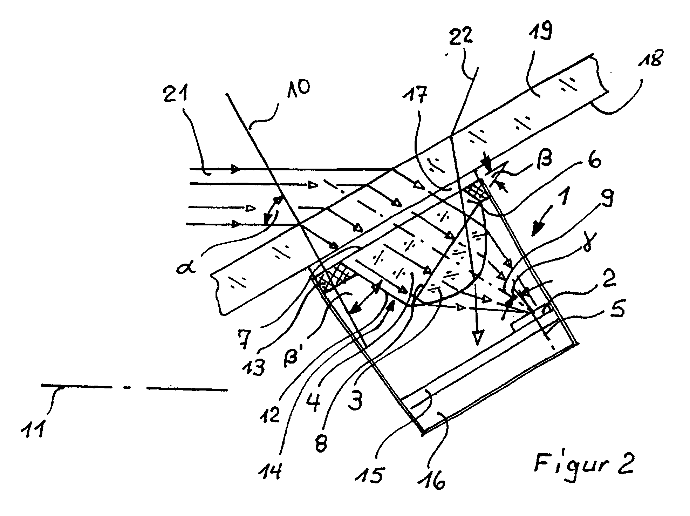

Figur 2: eine schematische Darstellung einer Sensoreinrichtung zur Vorfeldlichtdetektierung in einer aufgeschnittenen Seitenansicht,

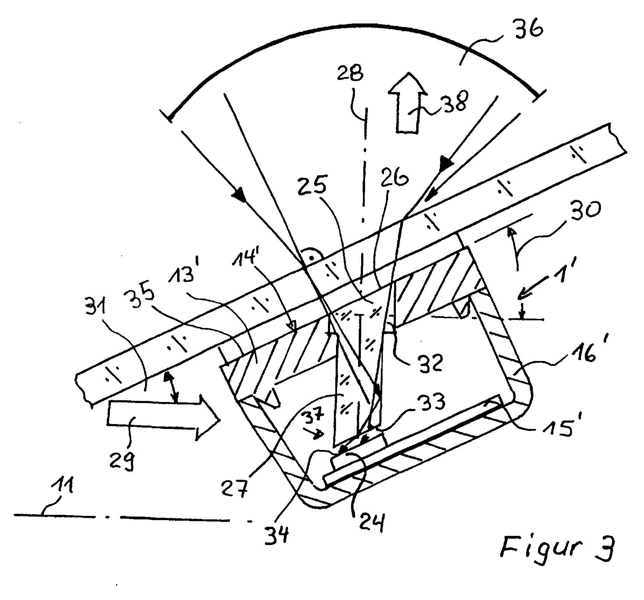

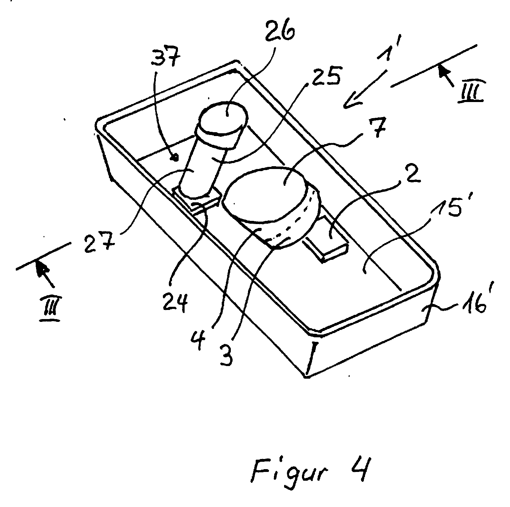

Figur 3: eine schematische Darstellung einer nicht zur Erfindung gehörenden Sensoreinrichtung zur Umfeldlichtdetektierung entlang der Linie III-III von Figur 4 geschnitten und

Figur 4: eine räumliche Darstellung einer Sensoreinrichtung zur Vorfeldlichtdetektierung in Kombination mit einem nicht zur Erfindung gehörenden Umfeldlichtsensor ohne Trägerplatte.

Eine Sensoreinrichtung (1) besteht im wesentlichen aus einem Lichtempfangselement (2), einer Sammeloptik (3) und einem optischen Element (4).

Das Lichtempfangselement (2) ist als Siliciumdiode bzw. als geeigneter Sensorchip ausgebildet. Senkrecht zu seiner Oberfläche weist das Lichtempfangselement (2) eine Sensorachse (5) auf. Dem Lichtempfangselement (2) vorgelagert ist die Sammeloptik (3), die als asphärische Plankonvexlinse bzw. Sammellinse ausgebildet ist. Sie kann aber auch als Fresnellinse oder als prismenartige Sammeloptik ausgebildet sein. Die Sammeloptik (3) ist mit dem ihr vorgelagerten optischen Element (4) verbunden. Das optische Element (4) ist als Prismenkörper (6), der die Form eines schräg abgeschnittenen Kreiszylinders aufweist, ausgebildet. Der Prismenkörper (6) weist an seiner der Sammeloptik (3) abgewandten Seite eine Lichteintrittsfläche (7) auf. An der der Sammeloptik (3) benachbarten Lichtaustrittsfläche (8) ist der Prismenkörper (6) mit der planen Seite der Sammeloptik (3) verklebt. Es ist aber auch möglich, die Sammeloptik (3) direkt an den Prismenkörper (6) anzuformen. Die optische Achse (9) der Sammeloptik (3) fällt mit der optischen Achse des Prismenkörpers (6) zusammen. Die Oberfläche des Lichtempfangselementes (2) ist etwa parallel zur Lichteintrittsfläche (7) des optischen Elementes (4) angeordnet, so daß Sensorachse (5) und optische Achse (9) der Sammeloptik (3) um einen Winkel $\gamma$, der den von Lichteintrittsfläche (7) und Lichtaustrittsfläche (8) gebildeten Spitzenwinkel $\beta$ des Prismenkörpers (6) entspricht, geneigt sind. Grundsätzlich ist es aber auch möglich, die Sensorachse (5) mit der optischen Achse (9) zusammenfallen zu lassen, die Oberfläche des Lichtempfangselementes (2) also senkrecht zur optischen Achse (9) der Sammeloptik (3) anzuordnen, so daß die Sensorachse (5) mit der optischen Achse (9) der Sammeloptik (3) zusammenfällt. Der Winkel $\gamma$ wird zweckmäßigerweise zwischen 0° und ca. 50° betragen.

Das Einfallslot (10) der Lichteintrittsfläche (7) bildet mit einer Parallelen zu einer Fahrzeuglängsachse (11) einen Einfallswinkel $\alpha$. Parallel zur Fahrzeuglängsachse (11) auf die Lichteintrittsfläche (7) auftreffendes Licht wird im optischen Element (4) zum Einfallslot (10) hin gebrochen und bildet mit dem Einfallslot (10) einen Ausfallswinkel $\beta'$, der dem Spitzenwinkel $\beta$ des optischen Elementes (4) entspricht.

Zur Lichteintrittsfläche (7) hin wird die Mantelfläche (12) von einer Trägerplatte (13) umgeben. Sammellinse (3), Prismenkörper (6) und Trägerplatte (13) bilden einen Terminal (14). Das Lichtempfangselement (2) ist auf einer Platine (15) angeordnet, die in ein Gehäuse (16) integriert ist. Das Gehäuse (16) ist am Terminal (14) befestigbar. Der Terminal (14) wird mit der Lichteintrittsfläche (7) des Prismenkörpers (6) mit hochtransparentem Kleber (17) gegen die Rückseite (18) einer Fahrzeugfrontscheibe (19) eines Fahrzeuges (20) geklebt. Die Brechungsindizes von Fahrzeugfrontscheibe (19), Kleber (17), Prismenkörper (6) und Sammellinse (3) liegen nahe beieinander. Es gilt daher mindestens näherungsweise die Formel

$$\sin \beta = \frac{\sin \alpha}{n_{Glas}},$$

wobei $n_{Glas}$ für den Brechungsindex von Terminal (14) und der Fahrzeugfrontscheibe (19) steht. Der Spitzenwinkel $\beta$ des optischen Elementes (4) bzw. des Prismenkörpers (6) ergibt sich damit zwingend aus der Neigung der Fahrzeugfrontscheibe (19) gegenüber der Fahrzeuglängsachse (11). Die Sensoreinrichtung ist im Bereich des Innenspiegels an die Fahrzeugfrontscheibe (19) geklebt. Dadurch ist die Sensoreinrichtung (1) zum Innenraum des Fahrzeuges (20) hin vom Innenspiegel verdeckt und praktisch nicht sichtbar bzw. für den Fahrer zumindest nicht störend.

Die Sammeloptik (3) mit kurzer Brennweite verringert den Abstand zwischen Lichtempfangselement (2) und Sammeloptik (3), so daß die Sensoreinrichtung (1) eine kurze Baulänge aufweist. Durch die Anordnung der Sensoreinrichtung (1) im, Bereich der Fahrzeugfrontscheibe (19) wird zugleich erreicht, daß Licht von entgegenkommenden Fahrzeugen praktisch nicht zu einem unerwünschten Sensorsignal führt.

Licht am Ende einer kurzen Dunkelheitsstrecke wird mit Hilfe der Sensoreinrichtung (1) detektiert. Da das Sehziel klein im Verhältnis zum Abstandsquadrat (Abstand zwischen Sehziel und Kraftfahrzeug) ist, besitzt das zu detektierende Vorfeldlichtbündel (21) nur eine geringe Divergenz, es kann also als quasi paralleles Licht betrachtet werden. Durch die Einkoppelung des Vorfeldlichtbündels (21) in die Fahrzeugfrontscheibe (19) wird bereits eine erste Bündelung des Lichtes, d. h., eine Verminderung der Bündeldivergenz und eine Umlenkung erreicht, da die Fahrzeugfrontscheibe normalerweise nicht senkrecht zur Fahr- bzw. Fahrzeuglängsachse (11) steht. Das Vorfeldlichtbündel (21) wird durch die vorzugsweise asphärische Sammellinse (3) auf das Lichtempfangselement (2) fokussiert. Licht (22) aus anderen Raumrichtungen, die nicht etwa parallel zur Fahrzeuglängsachse (11) verlaufen, fällt durch die erfindungsgemäße Anordnung nicht auf das Lichtempfangselement (2). Das Vorfeldlicht bzw. das Vorfeldlichtbündel (21) wird von der Sensoreinrichtung (1) somit detektiert und zur Fahrlichtschaltung genutzt. Bei ausreichendem Licht am Ende der kurzen Dunkelheitsstrecke, beispielsweise einer Unterführung (23), unterbleibt ein automatisches Einschalten und bei nicht ausreichendem Umfeldlicht wird das Fahrlicht durch ein Sensorsignal der Sensoreinrichtung (1) eingeschaltet.

Die Sensoreinrichtung (1') kann ein zweites Lichtempfangselement (24) mit einem vorgelagerten zweiten optisches Element (25) aufweisen. Das zweite optische Element (25) weist eine zweite Lichteintrittsfläche (26) auf, die in einer Ebene mit der Lichteintrittsfläche (7) angeordnet ist. Das zweite Lichtempfangselement (24) ist ebenfalls als Halbleiterelement, beispielsweise als Siliziumdiode oder auch als geeigneter Sensorchip ausgebildet. Dem zweiten Lichtempfangselement (24) vorgelagert ist das zweite optische Element (25), das als ein Lichtleiter (27) ausgebildet ist. Der Lichtleiter (27) ist als zylindrischer Körper ausgebildet, dessen Längsachse (28) in vertikaler Richtung angeordnet ist. An seinem dem zweiten Lichtempfangselement (24) abgewandten Ende weist der Lichtleiter (27) die zweite Lichteintrittsfläche (26) auf. Die zweite Lichteintrittsfläche (26) ist gegenüber einer Horizontalen (29) bzw. der Fahrzeuglängsachse (11) um einen Neigungswinkel (30) geneigt. Der Neigungswinkel (30) der zweiten Lichteintrittsfläche (26) entspricht dem Neigungswinkel (31) der Fahrzeugfrontscheibe (19) gegenüber der Horizontalen (29). An seinem der zweiten Lichteintrittsfläche (26) benachbarten Bereich weist der Lichtleiter (27) eine Verdickung (32) auf. Durch die Verdickung (32) kann auch noch schräg einfallendes Licht in den Lichtleiter (27) gelangen und mit Hilfe von Totalreflektion zu einer der zweiten Lichteintrittsfläche (26) abgewandten zweiten Lichtaustrittsfläche (33) geleitet werden. Das an der zweiten Lichtaustrittsfläche (33) austretende Licht wird von dem der zweiten Lichtaustrittsfläche (33) benachbarten zweiten Lichtempfangselement (24) detektiert. Die zweite Lichtaustrittsfläche (33) verläuft etwa parallel zur zweiten Lichteintrittsfläche (26). Das zweite Lichtempfangselement (24) ist auf der Platine (15') angeordnet. Die Platine (15') und das zweite Lichtempfangselement (24) mit seiner Detektionsfläche (34) verlaufen ebenfalls etwa parallel zur zweiten Lichteintrittsfläche (26). Der Lichtleiter (27) ist mit seiner Verdickung (32) in die Trägerplatte (13') so eingebettet, daß die zweite Lichteintrittsfläche (26) und die Außenfläche (35) der Trägerplatte (13') in einer Ebene liegen. Zweites optisches Element (25), optisches Element (4) mit Sammeloptik (3) und Trägerplatte (13') bilden einen Terminal (14'). Das zweite Lichtempfangselement (24) ist zusammen mit dem Lichtempfangselement (2) auf der Platine (15') angeordnet, die in das Gehäuse (16') integriert ist. Das Gehäuse (16') ist am Terminal (14') befestigbar.

Die Sensoreinrichtung (1') ist im Bereich des Innenspiegels an die Fahrzeugfrontscheibe (19) geklebt. Die Sammeloptik (3) mit kurzer Brennweite und der schräg im Gehäuse (16') angeordnete Lichtleiter (27) verringern den Abstand zwischen Lichtempfangselement (2) und Sammeloptik (3) bzw. zwischen zweiter Lichteintrittsfläche (26 ) und zweitem Lichtempfangselement (24), so daß die Sensoreinrichtung (1') eine kurze Bautiefe aufweist. Durch die Anordnung der Sensoreinrichtung (1') im Bereich der Fahrzeugfrontscheibe (19) wird zugleich erreicht, daß Licht von entgegenkommenden Fahrzeugen praktisch nicht zu einem unerwünschten Sensorsignal führt. Ein Umfeldlichtbündel (36) mit einem Maximum in vertikaler Richtung bzw. parallel zu einer Vertikalen (38) wird mit Hilfe der Sensoreinrichtung (1') bzw. des zweiten Lichtempfangselementes (24) und dem vorgeschalteten zweiten optischen Element (25) detektiert. Das Umfeldlichtbündel (36), welches dem zweiten optischen Element (25) zugeführt wird, und das Vorfeldlichtbündel (21), welches dem optischen Element (4) mit Sammeloptik (3) zugeführt wird, werden von der Sensoreinrichtung (1') somit detektiert und zur Fahrlichtschaltung genutzt. Die Helligkeitssignale von Lichtempfangselement (2) und zweitem Lichtempfangselement (24) werden einer auf der Platine (15') angeordneten elektronischen Schaltung zugeführt, von dieser verglichen und ausgewertet und somit zur Fahrlichtschaltung genutzt. Bei ausreichendem Licht am Ende einer kurzen Dunkelheitsstrecke 23 unterbleibt ein automatisches Einschalten und bei nicht ausreichendem Licht wird das Fahrlicht durch ein Sensorsignal eingeschaltet.

Die Sensoreinrichtung (1') hat den Vorteil, daß sie eine komplette kompakte Einheit bildet, die leicht und somit kostengünstig und zudem verschmutzungssicher von innen an eine Fahrzeugfrontscheibe (19) eines Fahrzeuges (20) montierbar ist.

## Patentansprüche

1. Sensoreinrichtung (1) für eine automatische Fahrlichtschaltung eines Fahrzeuges, bei der eine Sammeloptik (3) einem Lichtempfangselement (2) vorgelagert ist, wobei ein etwa parallel zu der Fahrzeuglängsachse (11) einfallendes Vorfeldlichtbündel (21) so gebrochen wird, dass es etwa parallel zur optischen Achse (9) der Sammeloptik (3) verläuft und von der Sammeloptik (3) auf das Lichtempfangselement (2) fokussiert wird, **dadurch gekennzeichnet, dass** zwischen der Sammeloptik (3) und einer Fahrzeugfrontscheibe (19) ein optisches Element (4) angeordnet ist, dessen der Sammeloptik (3) abgewandte Lichteintrittsfläche (7) in vertikaler Richtung gegenüber der Fahrzeuglängsachse (11) und der optischen Achse (9) der Sammeloptik (3) entsprechend geneigt ist, und dass die Oberfläche des Lichtempfangselementes (2) parallel zur Lichteintrittsfläche (7) des optischen Elementes (4) angeordnet ist.

2. Sensoreinrichtung nach Anspruch 1, **dadurch gekennzeichnet, daß** die Sammeloptik (3) eine optische Achse (9) aufweist, die zu einer senkrecht zum Lichtempfangselement (2) verlaufenden Sensorachse (5) winklig angeordnet ist.

3. Sensoreinrichtung nach Anspruch 1 oder 2, **dadurch gekennzeichnet, daß** die Lichteintrittsfläche (7) in horizontaler Richtung im wesentlichen senkrecht zur optischen Achse (9) der Sammeloptik (3) angeordnet ist.

4. Sensoreinrichtung nach einem der Ansprüche 1 bis 3, **dadurch gekennzeichnet, daß** das optische Element (4) als Prismenkörper (6) ausgebildet ist, der die Form eines schräg abgeschnittenen Kreiszylinders aufweist.

5. Sensoreinrichtung nach Anspruch 4, **dadurch gekennzeichnet, daß** der Prismenkörper (6) an seiner der Lichteintrittsfläche (7) abgewandten Lichtaustrittsfläche (8) mit der Sammeloptik (3) verbunden ist, die als asphärische Sammellinse ausgebildet ist.

6. Sensoreinrichtung nach einem der Ansprüche 1 bis 5, **dadurch gekennzeichnet, daß** das optische Element (4) an seiner Mantelfläche (12) mit einer Trägerplatte (13,13') verbunden ist, die ihrerseits mit einem Gehäuse (16,16') verbindbar ist.

7. Sensoreinrichtung nach einem der Ansprüche 1 bis 6, **dadurch gekennzeichnet, daß** das optische Element (4) mit seiner Lichteintrittsfläche (7) mit einem Kleber (17) von innen gegen die Fahrzeugfrontscheibe (19) eines Fahrzeuges (20) so klebbar ist, daß die Lichteintrittsfläche (7) etwa parallel zur Fahrzeugfrontscheibe (19) verläuft.

8. Sensoreinrichtung nach Anspruch 7, **dadurch gekennzeichnet, daß** die Brechungsindizes von Fahrzeugfrontscheibe (19), Kleber (17), optischen Element (4) und Sammeloptik (3) nahe beieinander liegen.

9. Verfahren für eine automatische Fahrlichtschaltung eines Fahrzeuges, bei dem von einer Sensoreinrichtung (1) Vorfeldlicht detektiert und von einer elektronischen Schaltung mit von einem Umfeldlichtsensor detektiertem Umfeldlicht verglichen und zur Fahrlichtschaltung genutzt wird, wobei das Vorfeldlicht als ein etwa paralleles Vorfeldlichtbündel (21) zur Fahrzeuglängsachse (11) etwa parallel verlaufend in die Fahrzeugfrontscheibe (19) eingekoppelt wird, und über eine Sammeloptik (3) auf ein Lichtempfangselement (2) fokussiert und von dem Lichtempfangselement (2) detektiert wird, wobei Licht (22) aus anderen Raumrichtungen am Lichtempfangselement (2) vorbeigeleitet wird, **dadurch gekennzeichnet, dass** das parallele Vorfeldlichtbündel (21) von einer in vertikaler Richtung geneigten Lichteintrittsfläche (7) eines optischen Elements (4) gebrochen wird, und daß die Oberfläche des Lichtempfangselements (2) parallel zur Lichteintrittsfläche (7) des optischen Elementes (4) verläuft.

10. Verfahren nach Anspruch 9, **dadurch gekennzeichnet, daß** bei ausreichendem Umfeldlicht am Ende einer kurzen Dunkelstrecke (23) ein automatisches Einschalten unterbleibt und bei nicht ausreichendem Umfeldlicht das Fahrlicht durch ein Sensorsignal der Sensoreinrichtung (1) eingeschaltet wird.

**Claims**

1. Sensor device (1) for automatic lighting control on a vehicle, wherein a focusing lens system (3) is mounted in front of a light receiving element (2), a pencil of foreground rays (21) which is incident approximately parallel to the vehicle's longitudinal axis (11) being refracted in such a manner that it extends approximately parallel to the optical axis (9) of the focusing lens system (3) and is focused by the focusing lens system (3) onto the light receiving element (2), **characterised in that** disposed between the focusing lens system (3) and a vehicle windscreen (19) is an optical element (4) of which the light entrance surface (7) furthest from the focusing lens system (3) is vertically inclined in relation to the vehicle's longitudinal axis (11) and along the optical axis (9) of the focusing lens system (3), and that the surface of the light receiving element (2) is disposed parallel to the light entrance surface (7) of the optical element (4).

2. Sensor device according to claim 1, **characterised in that** the focusing lens system (3) has an optical axis (9) which is disposed at an angle to a sensor axis (5) running perpendicular to the light receiving element (2).

3. Sensor device according to claim 1 or 2, **characterised in that** in the horizontal direction the light entrance surface (7) is disposed substantially perpendicular to the optical axis (9) of the focusing lens system (3).

4. Sensor device according to any of claims 1 to 3, **characterised in that** the optical element (4) is configured as a prism body (6) shaped like a bevelled regular cylinder.

5. Sensor device according to claim 4, **characterised in that** on the light entrance surface (8) thereof that is furthest from the light entrance surface (7) the prism body (6) is joined to the focusing lens system (3), which is configured as an aspherical focusing lens.

6. Sensor device according to any of claims 1 to 5, **characterised In that** the optical element (4) is joined at its generating surface (12) to a support plate (13, 13') which in tum is adapted to be joined to a housing (16, 16').

7. Sensor device according to any of claims 1 to 6, **characterised in that** the optical element (4) is adapted to be so bonded with an adhesive (17) by its light entrance surface (7) against the windscreen (19) of a vehicle (20) from the inside that the light entrance surface (7) extends substantially parallel to the vehicle windscreen (19).

8. Sensor device according to claim 7, **characterised in that** the refraction indices of the vehicle windscreen (19), the adhesive (17), the optical element (4) and the focusing lens system (3) lie close to one another.

9. Method for automatic lighting control on a vehicle, wherein a sensor device (1) detects foreground light and an electronic circuit compares said light with ambient light detected by a ambient light sensor and uses it for lighting control, the ambient light being passed into the vehicle windscreen (19) as a substantially parallel pencil of foreground rays (21) extending substantially parallel to the vehicle's longitudinal axis (11), and focused via a focusing lens system (3) onto a light receiving element (2) and detected by the light receiving element (2), with light (22) from other directions in space being conducted past the light receiving element (2), **characterised in that** the parallel pencil of foreground rays (21) is refracted by a vertically inclined light entrance surface (7) of an optical element (4), and that the surface of the light receiving element (2) extends parallel to the light entrance surface (7) of the optical element (4).

10. Method according to claim 9, **characterised in that** if there is sufficient ambient light the vehicle's lights are not automatically switched on at the end of a short stretch of darkness (23), and if there is insufficient ambient light the vehicle's lights are switched on by a sensor signal from the sensor device (1).

**Revendications**

1. Dispositif de détection (1) pour une commande automatique des phares d'un véhicule, dans lequel un système optique convergent (3) est agencé en amont d'un élément de réception de lumière (2), un faisceau de lumière d'avant-plan (21 ) tombant approximativement parallèlement à l'axe longitudinal (11) du véhicule est réfracté de telle sorte qu'il s'étend approximativement parallèlement à l'axe optique (9) du système optique convergent (3) et qu'il est focalisé par le système optique convergent (3) sur l'élément de réception de lumière (2), **caractérisé en ce qu'**entre le système optique convergent (3) et un pare-brise (19) de véhicule est agencé un élément optique (4) dont la surface d'entrée de lumière (7) détournée du système optique convergent (3) est inclinée en direction verticale par rapport à l'axe longitudinal du véhicule (11) et selon l'axe optique (9) du système optique convergent (3), et **en ce que** la surface de l'élément de réception de lumière (2) est agencée parallèlement à la surface d'entrée de lumière (7) de l'élément optique (4).

2. Dispositif de détection selon la revendication 1, **caractérisé en ce que** le système optique convergent (3) présente un axe optique (9) qui est agencé sous un angle par rapport à un axe de détecteur s'étendant perpendiculairement à l'élément de réception de lumière (2).

3. Dispositif de détection selon l'une ou l'autre des revendications 1 e 2, **caractérisé en ce que** la surface d'entrée de lumière (7) en direction horizontale est agencée sensiblement perpendiculairement à l'axe optique (9) du système optique convergent (3).

4. Dispositif de détection selon l'une des revendications 1 à 3, **caractérisé en ce que** l'élément optique (4) est réalisé sous forme de corps à prisme (6) qui présente la forme d'un cylindre circulaire coupé en biais.

5. Dispositif de détection selon la revendication 4, **caractérisé en ce que** sur sa face de sortie de lumière (8) détournée de la surface d'entrée de lumière (7), le corps à prisme (6) est relié au système optique convergent (3) qui est réalisé sous forme de lentille convergente asphérique.

6. Dispositif de détection selon l'une des revendications 1 à 5, **caractérisé en ce que** l'élément optique (4) est relié sur sa surface enveloppe (12) à une plaque support (13, 13') qui peut elle-même être reliée à un boîtier (16, 16').

7. Dispositif de détection selon l'une des revendications 1 à 6, **caractérisé en ce que** l'élément optique (4) peut être collé avec sa surface d'entrée de lumière (7) par une colle (17) depuis l'intérieur contre le pare-brise (19) d'un véhicule (20) de telle sorte que la surface d'entrée de lumière (7) s'étend approximativement parallèlement au pare-brise (19) du véhicule.

8. Dispositif de détection selon la revendication 7, **caractérisé en ce que** les indices de réfraction du pare-brise (19) de véhicule, de la colle (17), de l'élément optique (4) et du système optique convergent (3) sont proches les uns des autres.

9. Procédé pour une commande automatique des phares d'un véhicule dans lequel de la lumière d'avant-plan est détectée par un dispositif de détection (1) et comparée par un circuit électronique avec une lumière environnante détectée par un détecteur de lumière environnante et exploitée pour commander les phares, la lumière d'avant-plan étant injectée dans le pare-brise (19) du véhicule sous forme de faisceau de lumière d'avant-plan (21) approximativement parallèle, en s'étendant approximativement parallèlement à l'axe longitudinal (11) du véhicule, et étant focalisée via un système optique convergent (3) sur un élément de réception de lumière (2) et détectée par l'élément de réception de lumière (2), la lumière (22) provenant d'autres directions spatiales étant guidée en contournant l'élément de réception de lumière (2), **caractérisé en ce que** le faisceau de lumière d'avant-plan (21) parallèle est réfracté par une surface d'entrée de lumière (7) d'un élément optique (4) inclinée en direction verticale, et **en ce que** la surface de l'élément de réception de lumière (2) s'étend parallèlement à la surface d'entrée de lumière (7) de l'élément optique (4).

**10.** Procédé selon la revendication 9, **caractérisé en ce que** lorsque la lumière environnante est suffisante à la fin d'un trajet court dans l'obscurité (23), un allumage automatique des phares ne se produit pas et, lorsque la lumière environnante n'est pas suffisante, les phares sont allumés par un signal de détection du dispositif de détection (1).

Figur 1

Figur 2

Figur 3

EP 0 857 611 B1

Figur 4